# EUROPEAN PATENT SPECIFICATION

(11) **EP 3 597 955 B1**
(45) Date of publication and mention of the grant of the patent: **01.11.2023**
(21) Application number: 19185140.1
(22) Date of filing: 09.07.2019
(51) Int. Cl.: F16D 55/224, F16D 65/00

(54) **CLUTCH DEVICE AND BRAKE DEVICE**
KUPPLUNGSVORRICHTUNG UND BREMSVORRICHTUNG
DISPOSITIF D'EMBRAYAGE ET DISPOSITIF DE FREIN

(30) Priority: 13.07.2018 JP 2018133573
(43) Date of publication of application: 22.01.2020
(73) Proprietor: NABTESCO CORPORATION, Chiyoda-ku Tokyo 102-0093 (JP)
(72) Inventor: KONDO, Koji, Tokyo, 102-0093 (JP); OHNO, Tomoya, Tokyo, 102-0093 (JP)
(74) Representative: Grünecker Patent- und Rechtsanwälte PartG mbB

(56) References cited:
- WO-A1-2012/118133
- WO-A1-2014/065153
- JP-A- 2006 275 260
- JP-A- 2010 106 903
- US-A1- 2004 206 059
- US-B1- 6 834 751

## Description

The present invention relates to a clutch device and a brake device comprising the same.

WO 2013/077273 A1 discloses a brake device including a clutch device. A brake device includes a power transmission member (a guide tube in WO 2013/077273 A1) and an output unit (a screw shaft in WO 2013/077273 A1). The power transmission member moves by the power from a piston, and the output unit moves by the power from the power transmission member. In braking, the movement of the output unit causes a brake lever to operate. A brake pad provided on the brake lever contacts with a disk, producing a reaction force that causes the brake lever to press the output unit back. In such a braking operation, the surface of a clutch nut provided on the output unit contacts with the surface of the power transmission member with a strong force.

WO 2014/065153 A1 describes a parking brake operation state detection device capable of easily applying to an existing brake device a configuration whereby the operation state of a parking spring brake mechanism can be checked. A cover houses therein a parking spring and a parking piston. A position detection mechanism detects the position of the parking piston relative to the cover. A ring-shaped dust shield sheet is attached between the edge of a through hole and the end of the parking piston to prevent foreign matter from entering the inside of the cover. This dust shield sheet is formed of, for example, a rubber sheet.

In the pulley unit described in JP 2010 106903 A, a multi-disc friction clutch and an elastic member for urging the multi-disc friction clutch toward a movable cam disc are incorporated between the movable cam disc and a flange. The multi-plate friction clutch has a plurality of friction plates. A plurality of lubricant discharge grooves are radially provided on the friction surfaces of said friction plates.

In the wedge cam type brake known from WO 2012/118133 A1, a base end portion of a brake arm expands and swings by a cam action of a wedge cam caused by an axial movement of a cam shaft forming the wedge cam. When an excessive stroke is generated by the cam shaft, an adjusting rod fitted to the tip portion of the cam shaft is moved with respect to a stationary portion, thereby adjusting the relative position in the axial direction and changing the initial position of the cam shaft in the axial direction.

US6834751 discloses a clutch which has two sets of grooves, and clutch faces rotating along an axis of rotation perpendicular to their inner edges. Each set of grooves is formed in respective clutch faces as a straight line between an inner terminus and an outer terminus. The inner termini of the respective set of grooves are placed proximate to the inner edges for allowing oil to flow into central region of the clutch.

On the surfaces of components in the brake device, a lubricant is applied for reducing wear and smoothening the operation. A lubricant can flow onto the surface of the clutch nut of the output unit and the surface of the power transmission member. A residue of the lubricant accumulating on the surface of the clutch nut and the surface of the power transmission member may reduce the frictional force between them and allow the clutch nut to rotate easily. This may lead to instability in moving and stopping of the output unit when the output unit is pressed back during application of the brake. To address such a problem, the present invention aims at providing a clutch device and a brake device capable of braking a brake object with an improved stability.
(1) According to one aspect of the invention, a clutch device for transmitting a force produced by a drive unit to an output unit is provided, which is configured to be movable in a linear movement direction, with a frictional force produced between a contact surface and a contacted surface or disconnecting transmission of the force to the output unit, the clutch device comprising an inhibiting portion which is configured to form a space between the contact surface and the contacted surface when the contact surface and the contacted surface contact with each other to form a contact portion therebetween and which is configured to press a residue remaining on the contacted surface or the contact surface into the space when the contact surface and the contacted surface contact with each other to inhibit the residue from accumulating on the contact surface, wherein the contact surface and the contacted surface are oblique to the linear movement direction of the output unit, wherein the inhibiting portion includes a plurality of grooves formed in at least one of the contact surface and the contacted surface configured to contact with the contact surface, wherein the clutch device includes a clutch nut that includes a truncated cone portion and a tubular portion connected to a smaller diameter side of the truncated cone portion, and wherein the plurality of grooves includes grooves formed on the clutch nut and each extending from the truncated cone portion, which is included in the contact portion, to a middle portion of the tubular portion, which is an outside of the contact portion.

With this arrangement, a residue is inhibited from accumulating on the contact surface of the clutch device, and therefore, the position of the output unit is stabilized during application of the brake, resulting in improved stability of braking operation on a brake object.

(2) In the above clutch device, the inhibiting portion includes one or more grooves formed in at least one of the contact surface and the contacted surface configured to contact with the contact surface.

With this arrangement, a residue can be guided into the grooves formed in at least one of the contact surface and the contacted surface, and therefore, the residue can be inhibited from accumulating on the contact surface.

(3) In the above clutch device, the grooves extend to an outside of the contact portion in which the contact surface and the contacted surface contact with each other.

With this arrangement, a residue flowing into the grooves can be discharged to portions other than the contact portion, and therefore, the residue can be inhibited from accumulating in the contact portion.

(4) In the above clutch device, the inhibiting portion includes one or more primary grooves formed in at least one of the contact surface and the contacted surface and one or more secondary grooves intersecting the primary grooves.

With this arrangement, a residue located away from the primary grooves flow into the secondary grooves and then are discharged through the primary grooves. Thus, in a wide area around the primary grooves, the residue can be inhibited from accumulating.

(5) In the above clutch device, a blocking portion is provided in a circumference of the contact surface to block a lubricant that flows onto the contact surface and accumulates as the residue. With this arrangement, the lubricant can be inhibited from flowing onto the contact surface. Thus, the lubricant can be inhibited from accumulating on the contact surface.

(6) In the above clutch device, the inhibiting portion is replaced with a blocking portion provided in a circumference of the contact surface to block a lubricant that flows onto the contact surface and accumulates as the residue. With this arrangement, the lubricant can be inhibited from flowing onto the contact surface. Thus, the lubricant can be inhibited from accumulating on the contact surface.

(7) According to an aspect of the invention, a brake device including a component to be lubricated with a lubricant that forms the residue comprises any one of the clutch devices described above. With this arrangement, a lubricant in the brake device can be inhibited from accumulating on the contact surface of the clutch device, resulting in improved stability of braking operation on the brake object.

(8) In the above brake device, the brake device comprises: the output unit for applying a force to a brake object by moving with respect to the drive unit; and a transmission member for transmitting a power from the drive unit to the output unit by contacting with a clutch nut provided on the output unit; wherein the clutch nut provided on the output unit includes the contact surface, and the transmission member includes the contacted surface.

With this arrangement, in the brake device including the clutch nut, a lubricant can be inhibited from remaining on at least one of the contact surface of the clutch device and the contacted surface of the transmission member, resulting in improved stability of braking operation on the brake object.

The clutch device and the brake device described above can brake a brake object with an improved stability.
Fig. 1 is a perspective view of a caliper device.
Fig. 2 is a perspective view of a brake device.
Fig. 3 is a sectional view of the brake device along the line X-X in Fig. 2.
Fig. 4 is a sectional view of the brake device along the line Y-Y in Fig. 2.
Fig. 5 is a perspective view of a guide tube and portions therearound.
Fig. 6 is an exploded perspective view of a structure including a spindle.
Fig. 7 is an exploded perspective view of the guide tube and a structure housed in the guide tube.
Fig. 8 is a partial sectional view of the caliper device in normal operation, the view being cut along the line Y-Y in Fig. 5.
Fig. 9 is a partial sectional view of the caliper device with the guide tube located in position, the view being cut along the line Y-Y in Fig. 5.
Fig. 10 is a partial sectional view of the caliper device in extended operation, the view being cut along the line Y-Y in Fig. 5.
Fig. 11 is an enlarged sectional view showing the direction of a force applied to a clutch nut during application of the brake.
Fig. 12 is an enlarged sectional view showing the direction of a force applied to the clutch nut when braking is stopped.
Fig. 13 is a perspective view of the clutch nut according to an embodiment.
Fig. 14 is an enlarged sectional view showing the clutch nut and portions therearound.
Fig. 15 is a perspective view of the clutch nut according to a first variation.
Fig. 16 is an enlarged view of a contacted surface of the clutch nut according to a second variation.
Fig. 17 is an enlarged view of a contacted surface of the clutch nut according to a third variation.
Fig. 18 is an enlarged view of a contacted surface of the clutch nut according to a fourth variation.
Fig. 19 is an enlarged view of a contacted surface of the clutch nut according to a fifth variation.
Fig. 20 is a sectional view of the clutch nut according to Fig. 19.
Fig. 21 is a perspective view of the clutch nut according to a sixth variation.

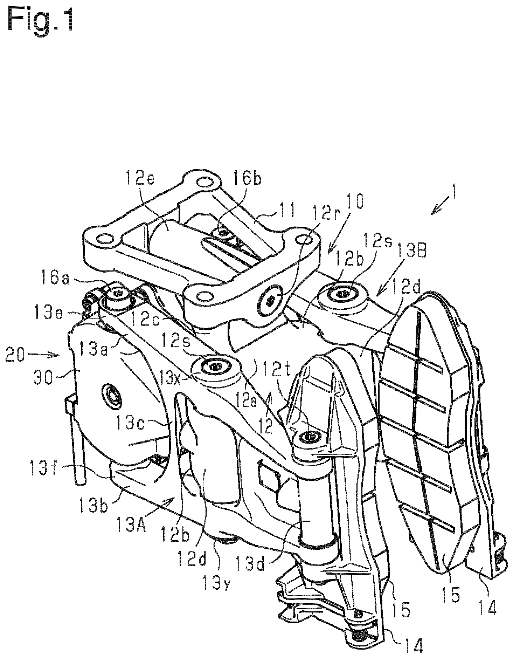

A caliper device will be described with reference to Figs. 1 to 21. A disk brake device of a railroad vehicle includes a caliper device 1 for braking a brake disk. The brake disk is disposed to be coaxial with a wheel so as to rotate with rotation of the wheel. The caliper device 1 is located near the brake disk in the railroad vehicle. The caliper device 1 brakes the wheel by nipping the brake disk (a brake object).

As shown in Fig. 1, the caliper device 1 includes a caliper body 10, back plates 14, 14, a pair of brake pads 15, 15, and a brake device 20. The caliper body 10 includes a bracket 11 fixed to the bottom surface of the vehicle body, a support member 12 mounted to the bracket 11, and a pair of brake levers 13A, 13B mounted to the support member 12.

The support member 12 is mounted to the bracket 11 via a support pin 12r so as to be swingable around the axis along the traveling direction of the vehicle. The support member 12 includes a body portion 12a, a pair of arm portions 12b extending from the body portion 12a, and a suspending portion 12c extending from the body portion 12a toward the vehicle. The pair of arms 12b are arranged in the direction in which an axle extends. Each of the arm portions 12b includes a pin receiving portion 12d for internally receiving a pivot pin 12s (described later). The suspending portion 12c includes a pin receiving portion 12e for internally receiving the support pin 12r.

The pair of brake levers 13A, 13B are arranged with the support member 12 interposed therebetween. Each of the brake levers 13A, 13B is mounted to the support member 12 via the pivot pin 12s so as to be swingable. The pivot pins 12s extend along the direction perpendicular to the axis of the support pin 12r and the axis of the wheel.

Each of the brake levers 13A, 13B includes a first lever 13a, a second lever 13b, a connecting portion 13c that connects between the first lever 13a and the second lever 13b, and a pin receiving portion 13d that connects between respective end portions of the first lever 13a and the second lever 13b and internally receives a back plate pin 12t. The first lever 13a and the second lever 13b are arranged in the direction along the central axis of the pivot pin 12s. The pivot pin 12s extends through a through-hole in a pivot portion 13x of the first lever 13a and a through-hole in a pivot portion 13y of the second lever 13b. The back plate 14 is mounted to the pin receiving portion 13d that connects between the respective end portions of the first lever 13a and the second lever 13b. On each of the respective end portions of the brake levers 13A, 13B, the back plate 14 is mounted so as to be swingable via the back plate pin 12t that extends through the pin receiving portion 13d. The back plate pin 12t extends in the same direction as the pivot pin 12s, Each back plate 14 has the brake pad 15 mounted thereto.

On the brake lever 13A, a drive unit 30 of the brake device 20 is mounted between a proximal end portion 13e of the first lever 13a and a proximal end portion 13f of the second lever 13b via a pin 16a so as to be rotatable.

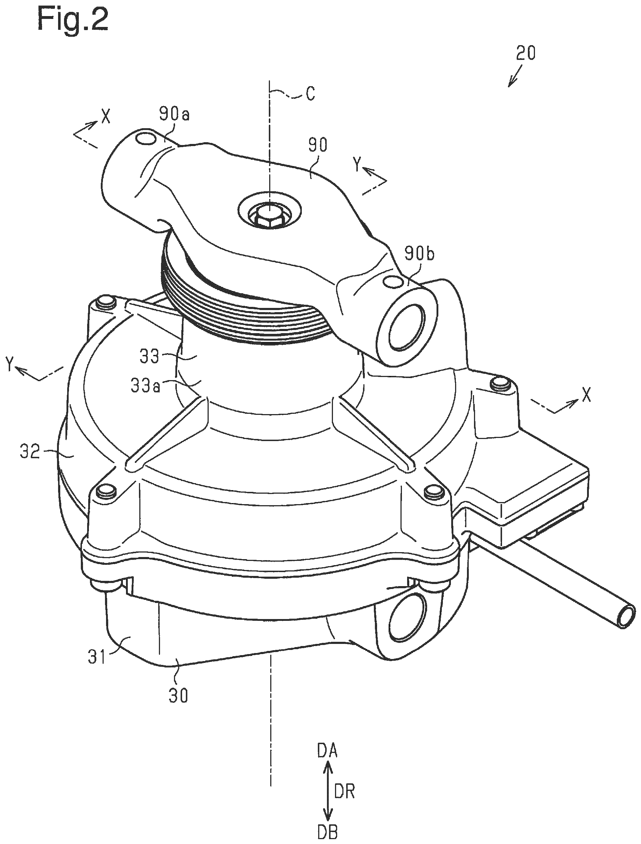

On the brake lever 13B, a connection member 90 (see Fig. 2) of the brake device 20 is mounted between a proximal end portion (not shown) of the first lever 13a and a proximal end portion (not shown) of the second lever 13b via a pin 16b so as to be rotatable. More specifically, one end portion 90a of the connection member 90 is rotatably connected to the proximal end portion of the first lever 13a, and the other end portion 90b of the connection member 90 is rotatably connected to the proximal end portion of the second lever 13b.

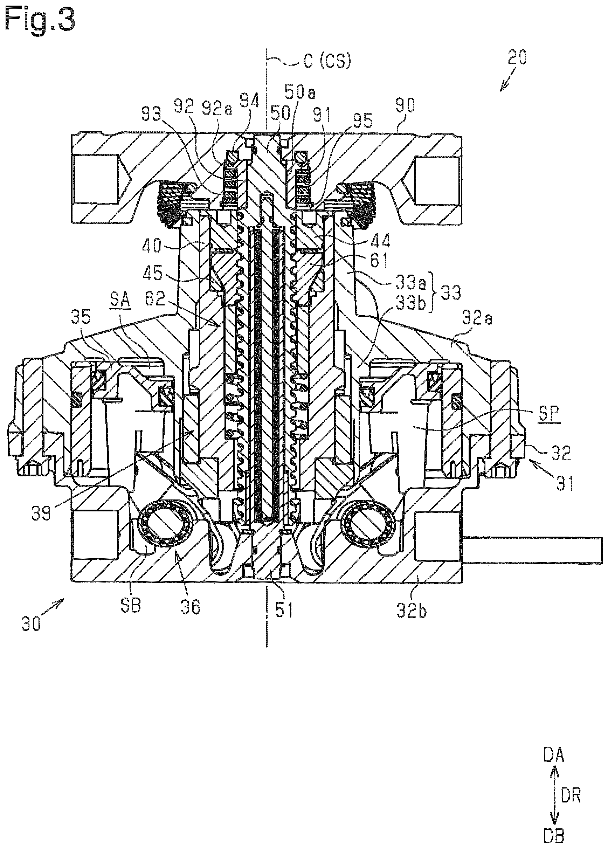

As shown in Figs. 2 and 3, a distal end portion of a spindle 50 (described later) is connected to an intermediate portion of the connection member 90. The spindle 50 is mounted to the connection member 90 so as to be rotatable about a central axis CS. More specifically, a fitting hole 91 is provided in the intermediate portion of the connection member 90. A connection portion 50a of the spindle 50 has an adapter 92 mounted thereto, and the adapter 92 has a flange 92a. The connection portion 50a of the spindle 50 and the adapter 92 are housed in the fitting hole 91 of the connection member 90. A rolling member 94 is disposed between an end surface of the fitting hole 91 of the connection member 90 and the flange 92a of the adapter 92, and the flange 92a of the adapter 92 is pressed against the end surface of the fitting hole 91 of the connection member 90 by a biasing member 93. The end portion of the biasing member 93 on the other side (the end portion thereof on the side opposite to the end portion pressing the end surface of the fitting hole 91) contacts with an anchor 95 mounted on the opening portion of the fitting hole 91.

The brake device 20 switches between braking and non-braking of the brake object by movement of the spindle 50 with respect to the drive unit 30. In the brake device 20, the spindle 50 advances and retreats with respect to the drive unit 30, as will be described later. When the spindle 50 advances and retreats, the drive unit 30 and the connection member 90 move closer to and away from each other, and accordingly the respective proximal end sides of the pair of brake levers 13A, 13B move closer to and away from each other. As a result of such movement, the pair of brake levers 13A, 13B rotate on the pivot pins 12s, and the brake pads 15 nip and release the brake disk. The rotation of the brake disk is braked in this manner.

### < Configuration of Brake Device >

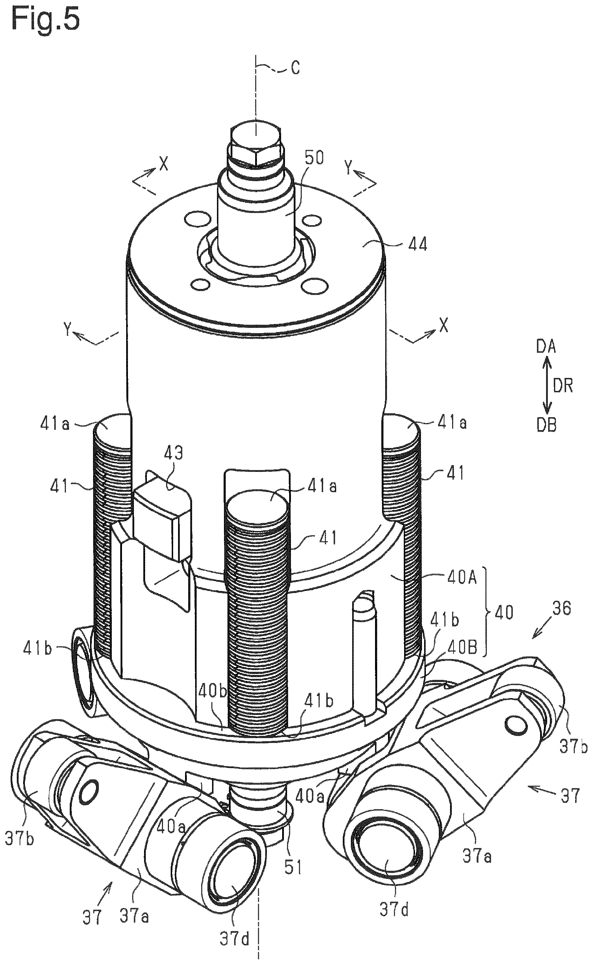

The brake device 20 will now be described with reference to Figs. 2 to 21. Fig. 2 shows the external appearance of the brake device 20. The plane containing the line X-X and the central axis C in Fig. 2 corresponds to the plane containing the line X-X and the central axis C in Fig. 5. The plane containing the line Y-Y and the central axis C in Fig. 2 corresponds to the plane containing the line Y-Y and the central axis C in Fig. 5. The central axis C of the brake device 20 corresponds to the central axis CS of the spindle 50 and the rotation axis CN of a clutch nut 61, both built in the brake device 20.

For description of the brake device 20, the direction in which the spindle 50 of the brake device 20 moves (the "front-rear direction DR") includes the direction in which the spindle 50 moves out of the drive unit 30 (hereinafter referred to as "the front direction DA") and the direction in which the spindle 50 moves into the drive unit 30 (hereinafter referred to as "the rear direction DB"). The direction along the circumference about the central axis CS of the spindle 50 is referred to as "the circumferential direction."

The components of the brake device 20 are made of metal, unless otherwise described. For example, the components of the brake device 20 are formed of iron, iron alloys, aluminum, aluminum alloys. Part of these components may contain a resin layer. For example, the outer surface of a cylinder 31 (described later) may have a coat.

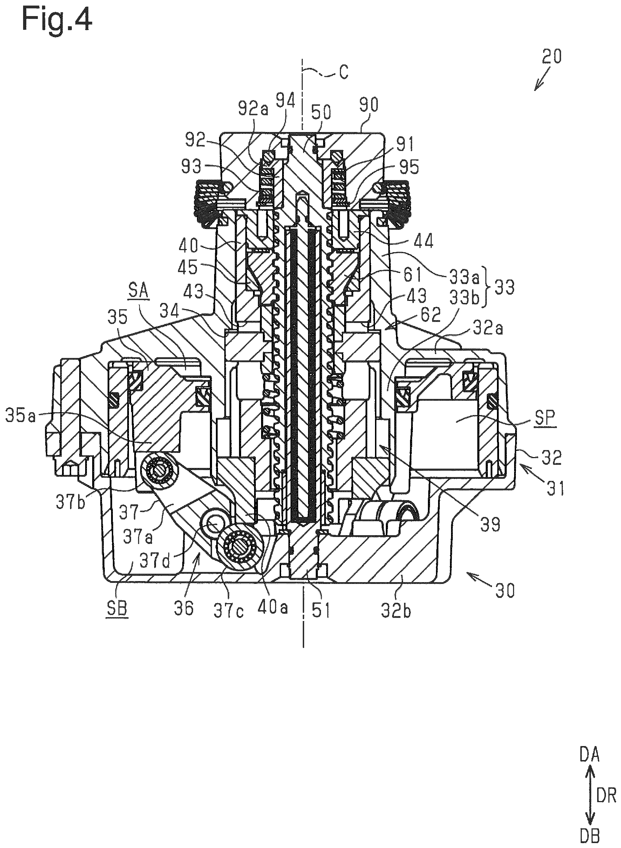

As shown in Figs. 3 and 4, the brake device 20 includes the drive unit 30, a clutch device 39, and the spindle 50 as an output unit that moves with respect to the drive unit 30. The clutch device 39 includes a guide tube 40 (a transmission member) and the clutch nut 61. The guide tube 40 moves by the power of the drive unit 30 to transmit the power of the drive unit 30 to the spindle 50, and the clutch nut 61 intermediates between the guide tube 40 and the spindle 50 to transmit power therebetween. The spindle 50 applies a force to the brake disk (the brake object) by moving with respect to the drive unit 30. The spindle 50 moves through the guide tube 40. The connection member 90 is connected to the distal end portion of the spindle 50, as described above.

The drive unit 30 moves the guide tube 40. The drive unit 30 includes the cylinder 31, a piston 35 that moves in the cylinder 31, and a boosting mechanism 36 for boosting the power of the piston 35.

The cylinder 31 includes an outer tube 32 and an inner tube 33. The outer tube includes a front surface portion 32a and a rear surface portion 32b. In the embodiment, the front surface portion 32a and the inner tube 33 are integrated together. The rear surface portion 32b is separate from the front surface portion 32a and the inner tube 33.

The inner tube 33 is provided on the outer tube 32 so as to extend through the front surface portion 32a of the outer tube 32. An inner tube front portion 33a of the inner tube 33 projects from the outer tube 32. An inner tube rear portion 33b of the inner tube 33 is inserted in the outer tube 32. The inner tube 33 contains the guide tube 40 inserted therein.

An annular space SP is maintained between the outer tube 32 and the inner tube rear portion 33b. The piston 35 is disposed in the annular space SP so as to be movable in the front-rear direction DR. The piston 35 has an annular shape and partitions the annular space SP into a pressure chamber SA on the front surface portion 32a side and a rear housing chamber SB on the rear surface portion 32b side. The pressure in the pressure chamber SA is controlled with a fluid (e.g., the air) fed into or discharged from the pressure chamber SA. The rear housing chamber SB contains the boosting mechanism 36.

The inner tube 33 has, on the inner circumferential surface thereof, a contact portion 34 (see Fig. 4) to be engaged with projections 64b of a restriction portion 64 (described later). The contact portion 34 restricts the restriction portion 64 from moving in the front direction DA beyond the contact position (described later).

The boosting mechanism 36 will now be described with reference to Figs. 3 to 5. The boosting mechanism 36 boosts the pressing force of the piston 35 and transmits the pressing force to the guide tube 40. The boosting mechanism 36 includes one or more boosting levers 37. The boosting lever 37 transmits power from the piston 35 to the guide tube 40 or from the guide tube 40 to the piston 35. The boosting lever 37 is disposed on the rear side DB of the piston 35 and the guide tube 40. The boosting lever 37 includes a lever body 37a, and a first roller 37b and a second roller 37c. The lever body 37a has a pivot 37d. The first roller 37b is provided on one end, and the second roller 37c is provided on the other end, with the pivot 37d positioned therebetween. The first roller 37b contacts with a roller receiving portion 35a of the piston 35. The second roller 37c contacts with a roller receiving portion 40a of the guide tube 40. The distance from the pivot 37d to the first roller 37b is larger than the distance from the pivot 37d to the second roller 37c. With this arrangement, the boosting lever 37 boosts the force applied to the first roller 37b and outputs the boosted force from the second roller 37c.

The operation of the drive unit 30 is described below. When the air is fed into the pressure chamber SA and the piston 35 moves in the rear direction DB, the piston 35 presses the first roller 37b of the boosting lever 37 in the rear direction DB. As a result, the boosting lever 37 rotates, and the second roller 37c presses the guide tube 40 in the front direction DA. The guide tube 40, pressed by the boosting lever 37, moves in the front direction DA against the force of a first biasing member 41 (described later). The power for moving the guide tube 40 in the front direction DA is transmitted to the spindle 50 via the clutch nut 61, and thus the spindle 50 moves in the front direction DA along with the guide tube 40 (described later). Thus, the respective proximal end sides of the pair of brake levers 13A, 13B move away from each other, while the brake pads 15 of the pair of brake levers 13A, 13B move closer to each other to nip the brake disk. The rotation of the wheel is braked in this manner.

When the air is discharged from the pressure chamber SA, the pressing force of the boosting lever 37 pressing the guide tube 40 is reduced, and thus the guide tube 40 moves in the rear direction DB by the force of the first biasing member 41 (described later). The power for moving the guide tube 40 in the rear direction DB is transmitted to the spindle 50 via the clutch nut 61, and thus the spindle 50 moves in the rear direction DB along with the guide tube 40. Thus, the respective proximal end sides of the pair of brake levers 13A, 13B move closer to each other, while the brake pads 15 of the pair of brake levers 13A, 13B move away from each other to release the brake disk. The braking of the rotation of the wheel is stopped in this manner.

The guide tube 40 will now be described with reference to Figs. 5 to 8. The guide tube 40 moves with respect to the inner tube 33 of the cylinder 31. The guide tube 40 includes a front member 40A on the front side and a rear member 40B on the rear side (see Fig. 5). The front member 40A and the rear member 40B are fastened together so as not to be movable relative to each other.

The guide tube 40 is biased toward the rear direction DB by the first biasing member 41. The first biasing member 41 is disposed between the inner tube 33 and the guide tube 40. The first biasing member 41 is made of, for example, a coil spring (see Fig. 5). A front end 41a of the first biasing member 41 contacts with a spring receiving portion (not shown) of the inner tube 33. A rear end 41b of the first biasing member 41 contacts with a spring receiving portion 40b of the guide tube 40 on the rear direction DB side (see Fig. 5).

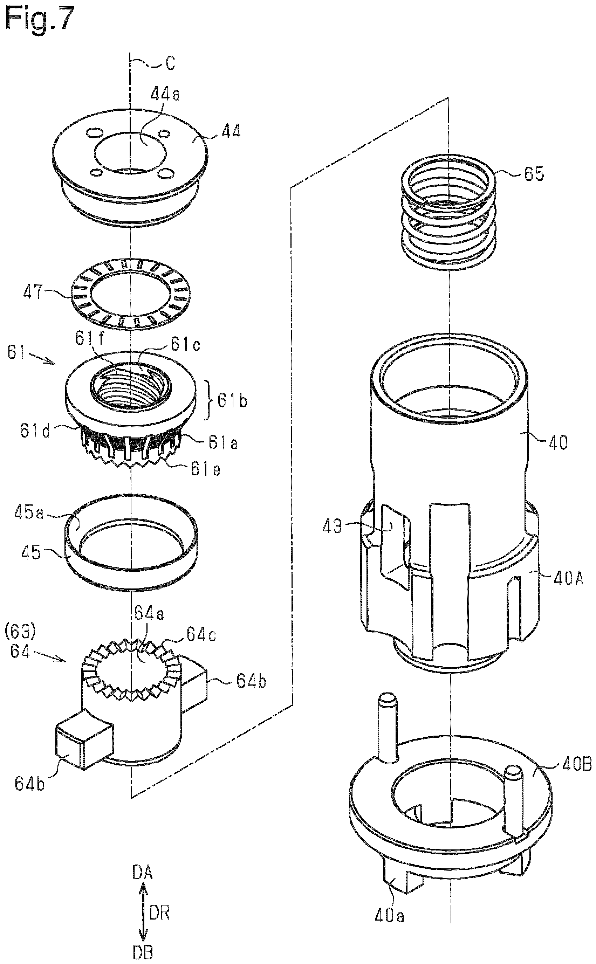

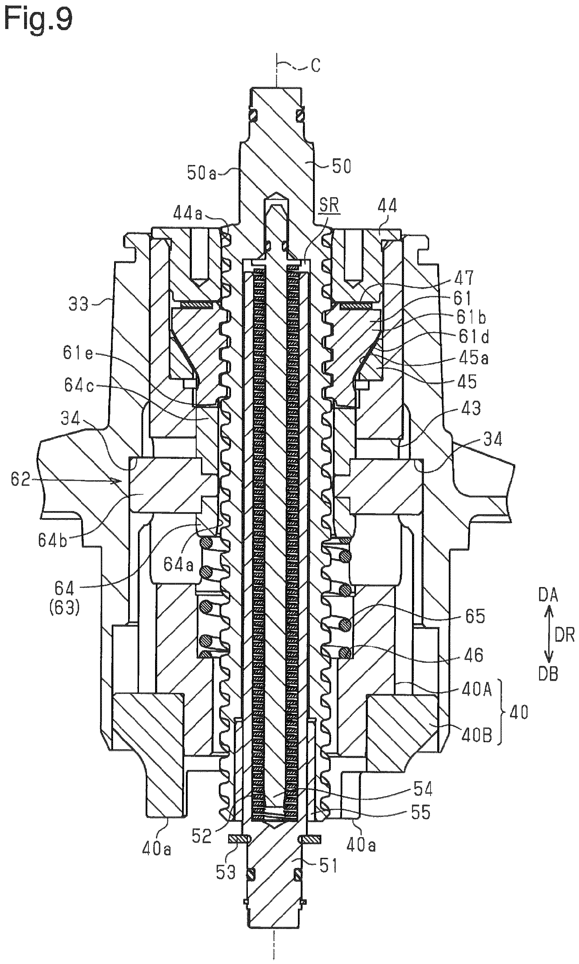

As shown in Figs. 5 and 7, the guide tube 40 has two through-holes 43 formed therein in the intermediate portion thereof in the front-rear direction DR. The through-holes 43 are penetrated by the projections 64b of the restriction portion 64 (described later). The width of the through-holes 43 in the circumferential direction is set such that the projections 64b of the restriction portion 64 can penetrate the through-holes 43 and such that the restriction portion 64 cannot rotate around the spindle 50. Further, when the restriction portion 64 moves in the front direction to a contact position (described later), the projections 64b engage with the contact portion 34 of the inner tube 33 (see Fig. 9) (described later).

As shown in Figs. 5 and 7, a cap 44 is mounted on the front end opening portion of the guide tube 40 so as to block the gap between the guide tube 40 and the spindle 50. The cap 44 has a through-hole 44a (see Fig. 7) formed therein to be penetrated by the spindle 50. The cap 44 is fixed so as not to be movable with respect to the guide tube 40 in the front-rear direction DR and the circumferential direction.

In the guide tube 40, a contacted surface 45a is provided on the rear side DB of the cap 44 so as to contact with a contact surface 61d of the clutch nut 61 (described later). The contacted surface 45a faces toward the front direction DA. Between the cap 44 and the contacted surface 45a, a space is maintained to receive an engagement portion 61b of the clutch nut 61 (described later). The contacted surface 45a is a surface of a contacted portion 45. The contacted portion 45 is fixed so as not to be movable with respect to the guide tube 40 in the front-rear direction DR and the circumferential direction.

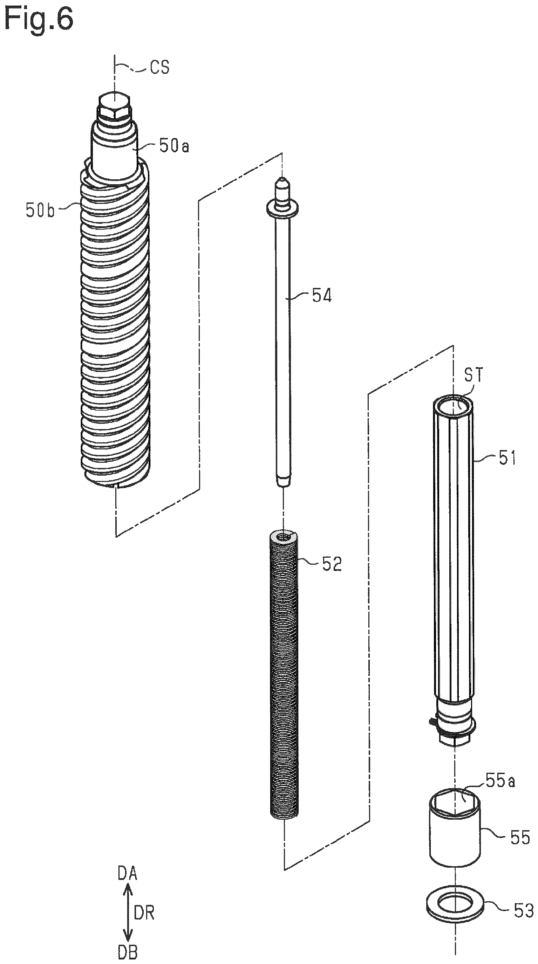

The supporting structure of the spindle 50 will now be described with reference to Fig. 6. The spindle 50 (the output unit) is positioned with respect to the guide tube 40 via the clutch nut 61. The spindle 50 (the output unit) is supported by a core 51 and is biased toward the front direction DA by a second biasing member 52 (an output unit biasing member).

The core 51 is fixed to the rear surface portion 32b of the outer tube 32 of the cylinder 31 such that the length thereof extends along the central axis C of the brake device 20 (see Fig. 3). The core 51 has a tubular shape and is open toward the front direction DA. The core 51 houses the second biasing member 52. The second biasing member 52 is made of a coil spring. The second biasing member 52 is disposed in the core 51 such that the length thereof extends along the central axis of the core 51. The cross section of the core 51 has a non-circular shape (e.g., a general hexagon) such that the core 51 engages with an anti-rotation member 55 (described later). Further, the core 51 has, on the rear end portion thereof, a stopper 53 for restricting the rearward movement of the spindle 50.

The spindle 50 is mounted to the core 51 so as to be movable in the front-rear direction DR with respect to the core 51 and unrotatable with respect to the core 51. The spindle 50 is hollow and is open at the rear side. The anti-rotation member 55 for prohibiting rotation of the spindle 50 is mounted to the rear end portion of the spindle 50. The anti-rotation member 55 has a hole 55a penetrated by the core 51. The hole 55a can engage with the core 51 in the circumferential direction and is movable in the longitudinal direction of the core 51. For example, the cross section of the hole 55a has a shape similar to the shape of the cross section of the core 51 (e.g., a general hexagon). Thus, the rotation of the spindle 50 is restricted.

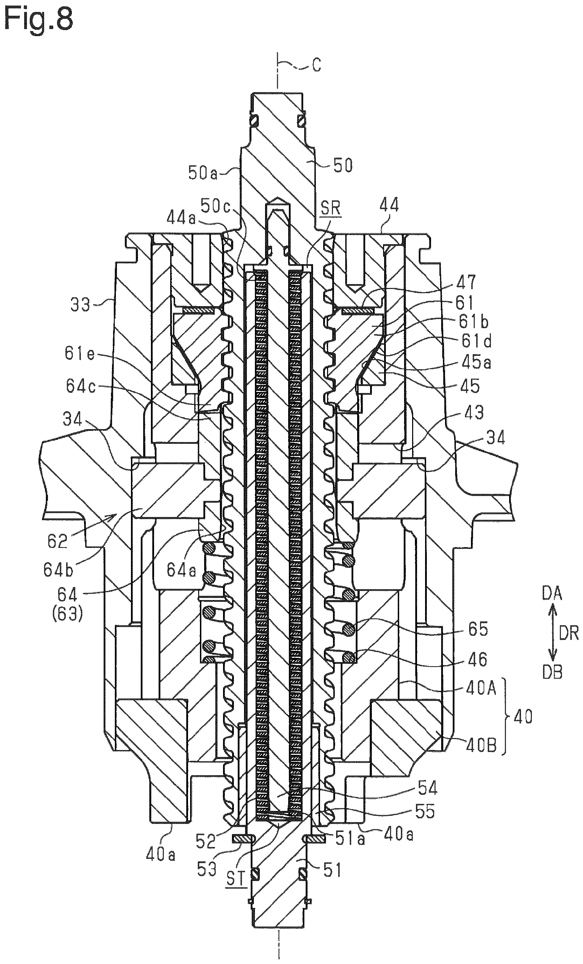

The spindle 50 houses a guide rod 54. The guide rod 54 guides the second biasing member 52. The guide rod 54 extends in the rear direction DB so as to extend along the central axis CS of the spindle 50. The spindle 50 contains a housing chamber SR that has a tubular shape and encloses the guide rod 54. The core 51 is inserted in the housing chamber SR of the spindle 50. The guide rod 54 in the housing chamber SR of the spindle 50 extends in the center of the coil spring of the second biasing member 52. The front end of the second biasing member 52 contacts with a front end surface 50c of the housing chamber SR of the spindle 50 (a flange of the guide rod 54). The rear end of the second biasing member 52 contacts with a rear end surface 51a of a core chamber ST in the core 51 (see Fig. 8). Thus, the spindle 50 is biased toward the front direction DA by the second biasing member 52.

The end portion of the spindle 50 on the front side DA provides a connection portion 50a. As described above, the connection member 90 is mounted to the connection portion 50a of the spindle 50 so as to be rotatable with respect to the spindle 50. The outer circumferential surface of the spindle 50 has an external thread 50b that engages with an internal thread 61f of the clutch nut 61 (described later).

The clutch nut 61 and a position adjustment mechanism 62 of the clutch nut 61 will now be described with reference to Figs. 7 and 8. The clutch nut 61 intermediates between the guide tube 40 and the spindle 50 to transmit the power of the guide tube 40 to the spindle 50.

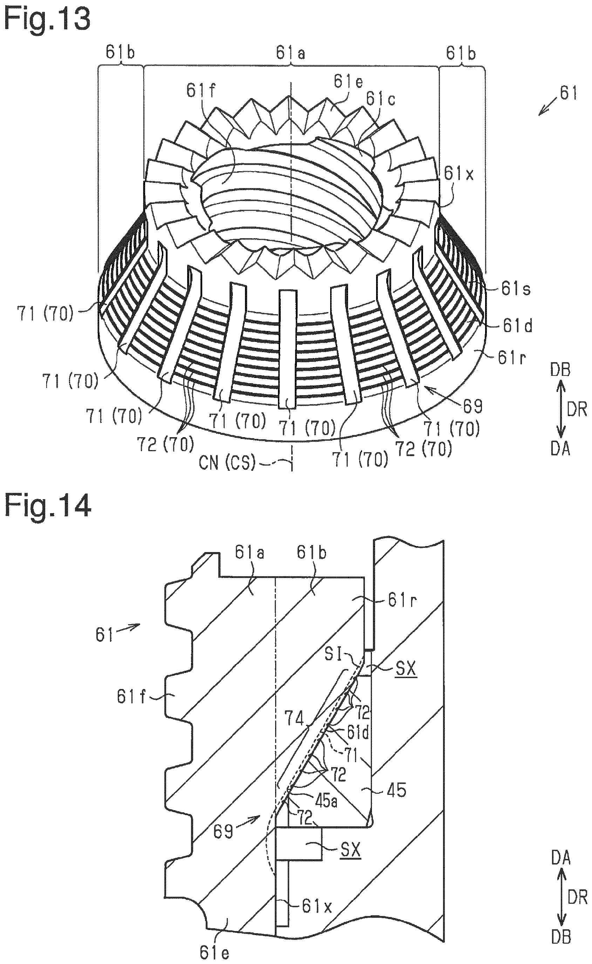

The clutch nut 61 includes a tubular portion 61a and an engagement portion 61b (see Fig. 13). The tubular portion 61a has a hole 61c and the engagement portion 61b is provided on the outer side of the tubular portion 61a. The spindle 50 extends through the hole 61c. The hole 61c of the clutch nut 61 has the inner thread 61f that engages with the external thread 50b of the spindle 50.

On the outer circumference of the engagement portion 61b of the clutch nut 61, a contact surface 61d is provided that can contact with the contacted surface 45a of the guide tube 40. The contact surface 61d faces toward the rear direction DB and is opposed to the contacted surface 45a. The rear end portion of the clutch nut 61 has teeth (hereinafter "the rear teeth 61e") that engage with front teeth 64c of the restriction portion 64.

The front end surface of the clutch nut 61 is opposed to the rear surface of the cap 44. A thrust bearing 47 intermediates between the front end surface of the clutch nut 61 and the rear surface of the cap 44. The clutch nut 61 is restricted from moving in the front direction DA by the rear surface of the cap 44 and is restricted from moving in the rear direction DB by the contacted surface 45a of the guide tube 40. Thus, the clutch nut 61 is located in position with respect to the guide tube 40 and is supported rotatably.

The position adjustment mechanism 62 adjusts the position of the clutch nut 61 with respect to the spindle 50 under a predetermined condition. More specifically, when the braking stroke is larger than a preset distance, the position adjustment mechanism 62 moves the position of the clutch nut 61 with respect to the spindle 50 in the rear direction DB. The braking stroke is the distance traveled by the guide tube 40 from the position at which the guide tube 40 takes its rearmost position (hereinafter "the rearmost position") to the position at which the pair of brake pads 15, 15 nip the brake disk to apply a force to the spindle 50 in the rear direction DB.

The position adjustment mechanism 62 is constituted by a restraint member 63 and the second biasing member 52 (described above). The restraint member 63 restrains the clutch nut 61 from rotating, and the second biasing member 52 biases the spindle 50 toward the front direction DA. The restraint member 63 is formed of, for example, the restriction portion 64 which will be described below.

The restriction portion 64 is positioned in the space between the guide tube 40 and the spindle 50 and is also positioned on the rear side DB of the clutch nut 61. The restriction portion 64 has a hole 64a penetrated by the spindle 50. The front end portion of the restriction portion 64 has teeth (hereinafter "the front teeth 64c") that engage with the rear teeth 61e of the clutch nut 61. The restriction portion 64 includes two projections 64b provided on the trunk thereof. The projections 64b extend radially outward from the central axis CS of the spindle 50. As described above, the projections 64b penetrate the through-holes 43 of the guide tube 40. The width of the through-holes 43 in the circumferential direction is set such that the projections 64b of the restriction portion 64 can penetrate the through-holes 43, and therefore, when the restriction portion 64 engages with the clutch nut 61, the clutch nut 61 is restricted from rotating about the spindle 50.

The restriction portion 64 is biased toward the front direction DA with respect to the guide tube 40 by a third biasing member 65. The third biasing member 65 is disposed in the guide tube 40 on the rear side DB of the restriction portion 64 The front end of the third biasing member 65 contacts with the rear end surface of the restriction portion 64, and the rear end of the third biasing member 65 contacts with a spring receiving portion 46 (see Fig. 8) provided on a rear part of the inner circumferential surface of the guide tube 40.

The operation of the restriction portion 64 will now be described with reference to Fig. 9. When the guide tube 40 is in the rearmost position, the restriction portion 64 is biased toward the front direction DA by the third biasing member 65 and engages with the clutch nut 61. This engagement restricts the clutch nut 61 from rotating.

When the guide tube 40 moves in the front direction DA, the restriction portion 64 in the guide tube 40 moves in the front direction DA along with the guide tube 40. The guide tube 40 moves in the front direction DA from the rearmost position by a preset distance and reaches a prescribed position (a position preset with respect to the inner tube 33), and the projection portions 64b of the restriction portion 64 contact with the contact portion 34 of the inner tube 33. Thus, the restriction portion 64 is located at the position where the projections 64b contact with the contact portion 34 of the inner tube 33 (the position with respect to the inner tube 33, hereinafter referred to as "the contact position") and is restricted from moving in the front direction. When the guide tube 40 moves further in the front direction DA from the prescribed position, the clutch nut 61 moves along with the guide tube 40, whereas the restriction portion 64 is stopped at the contact position, and therefore, the rear end of the clutch nut 61 and the front end of the restriction portion 64 are separated and thus disengaged from each other. Thus, the clutch nut 61 is permitted to rotate. When the guide tube 40 moves in the rear direction DB from a location on the front side DA of the prescribed position and reaches the prescribed position, the rear teeth 61e of the clutch nut 61 engage with the front teeth 64c of the restriction portion 64, and therefore, the clutch nut 61 engages with the restriction portion 64.

In summary, the restriction portion 64 operates as follows. When the guide tube 40 is located at a position on the rear side DB of the prescribed position, the restriction portion 64 restricts the clutch nut 61 from rotating. When the guide tube 40 is located at a position on the front side DA of the prescribed position, the restriction portion 64 permits the clutch nut 61 to rotate.

The operation of the spindle 50 and the clutch nut 61 will now be described with reference to Figs. 8 to 12. The spindle 50 and the clutch nut 61 operate in two modes. The operation in the first mode is performed when the guide tube 40 reciprocates in a range between the rearmost position and the prescribed position (hereinafter "the normal range") (this operation is hereinafter referred to as "the normal operation"). The operation in the second mode is performed when the guide tube 40 reciprocates in a range between the rearmost position and a position on the front side DA of the prescribed position (hereinafter "the extended range") (this operation is hereinafter referred to as "the extended operation"). In the extended operation, the position adjustment mechanism 62 adjusts the position of the clutch nut 61 with respect to the spindle 50.

First, the normal operation is described. When the brake pads 15 are worn slightly, the braking stroke of the spindle 50 is almost the same as the initial braking stroke thereof, the braking stroke being traveled by the spindle 50 until the brake pads 15 contact with the brake disk for braking. Therefore, the braking stroke of the guide tube 40 also remains almost the same as its initial amount, and thus the guide tube 40 operates in the normal range (see Figs. 8 and 9). In this operation, the clutch nut 61 and the restriction portion 64 remain engaged with each other over the entire normal range of the guide tube 40 in the front-rear direction DR. When the clutch nut 61 and the restriction portion 64 are engaged with each other, the spindle 50 operates as follows.

The spindle 50 moves in the front direction DA along with the guide tube 40, and the brake pads 15 contact with the brake disk (the brake object). The spindle 50 receives a reaction force and is pressed toward the rear direction DB. As a result, the contact surface 61d of the clutch nut 61 presses the contacted surface 45a of the guide tube 40. Since the guide tube 40 is acted on by a force of the piston 35 in the front direction DA, the reaction force is resisted with the force of the piston 35 to prohibit the spindle 50 from moving in the rear direction. Thus, the braking force is continuously applied to the brake disk (the brake object). When the force of the piston 35 is reduced and the guide tube 40 moves in the rear direction DB, the spindle 50 moves in the rear direction DB along with the guide tube 40, and therefore, the brake pads 15 are separated from the brake disk to stop braking of the wheel.

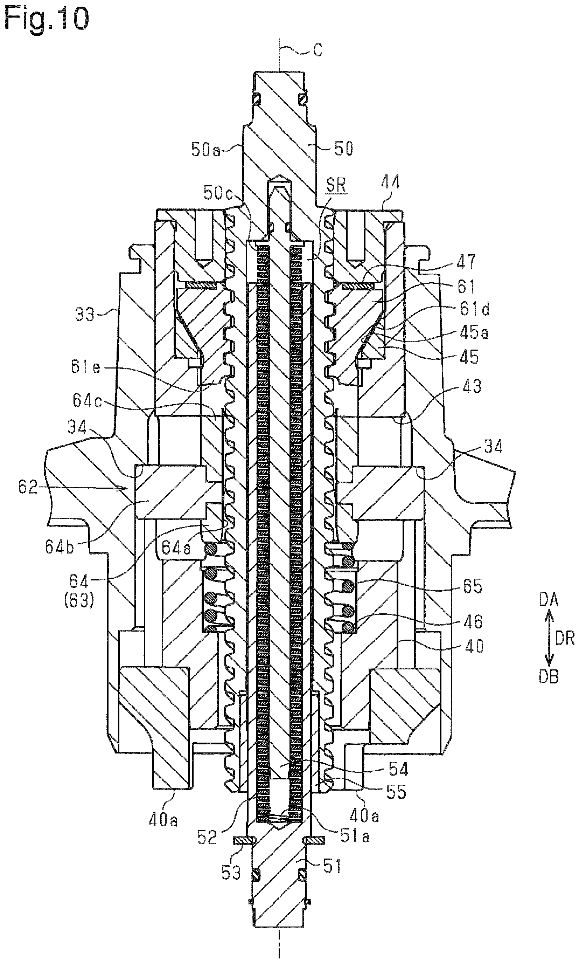

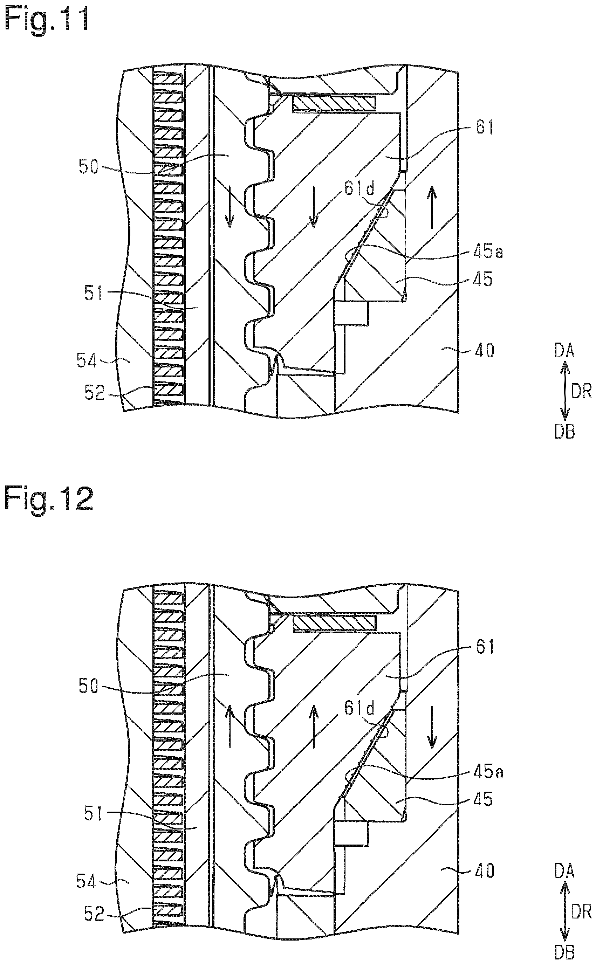

The extended operation will now be described with reference to Figs. 10 to 12. The arrows in Figs. 11 and 12 indicate the directions of the forces. When the brake pads 15 are worn significantly, the braking stroke of the spindle 50 and the guide tube 40 is larger than the initial braking stroke thereof, the braking stroke being traveled by the spindle 50 and the guide tube 40 until the brake pads 15 contact with the brake disk for braking. When the guide tube 40 is located at a position on the front side DA of the prescribed position, the clutch nut 61 is disengaged from the restriction portion 64 (see Fig. 10). At this time, the spindle 50 and the clutch nut 61 operate as follows.

When the guide tube 40 moves in the front direction DA as the clutch nut 61 is not engaged with the restriction portion 64, the clutch nut 61 and the spindle 50 move in the front direction DA accordingly. The spindle 50 then moves in the front direction DA, and the brake pads 15 contact with the brake disk. The spindle 50 receives a reaction force and is pressed toward the rear direction DB. As a result, the contact surface 61d of the clutch nut 61 presses the contacted surface 45a of the guide tube 40. Since the guide tube 40 is acted on by a force of the piston 35 in the front direction DA, the reaction force is resisted with the force of the piston 35 to prohibit the spindle 50 from moving in the rear direction (see Fig. 11). Thus, the braking force is continuously applied to the brake disk.

Then, when the force of the piston 35 is reduced and the guide tube 40 moves in the rear direction DB, since the spindle 50 is biased by the second biasing member 52 toward the front direction DA, the direction of the force acting on the clutch nut 61 is opposite to the direction of the force acting on the guide tube 40 (see Fig. 12). As a result, a smaller pressing force acts between the contact surface 61d of the clutch nut 61 and the contacted surface 45a of the guide tube 40, and the clutch nut 61 is permitted to rotate. Therefore, when a force directed from the cap 44 toward the rear direction DB is applied to the clutch nut 61 as the guide tube 40 moves in the rear direction, the clutch nut 61 moves in the rear direction DB while rotating with respect to the spindle 50. During this movement, no force is transmitted between the clutch nut 61 and the spindle 50 along the central axis CS, and therefore, the spindle 50 does not move in the rear direction. When the guide tube 40 reaches the prescribed position, the clutch nut 61 engages with the restriction portion 64. Thus, the clutch nut 61 is restricted from rotating, and therefore, the position of the clutch nut 61 is fixed with respect to the spindle 50. After the clutch nut 61 engages with the restriction portion 64, the spindle 50 moves in the rear direction DB along with the guide tube 40. As a result, the brake pads 15 are separated from the brake disk to stop braking of the wheel.

As described above, the position adjustment mechanism 62 operates when the guide tube 40 performs the extended operation. The position adjustment mechanism 62 provides the following effects. The braking stroke is larger than the initial braking stroke when the brake pads 15 (brake members) mounted to the spindle 50 of the brake device 20 are worn or when the brake disk is separated from the brake pads 15 of the brake device 20. As a result, the responsiveness is reduced due to the longer response time from start of the operation of the brake device 20 to application of the brake. This problem is overcome by the above configuration in which the position of the clutch nut 61 with respect to the spindle 50 is moved in the rear direction DB as the braking stroke is larger than the preset distance. Such position adjustment relocates the spindle 50 in the front direction DA with respect to the guide tube 40. Thus, it is possible to inhibit the braking stroke from being larger and inhibit the responsiveness from being reduced due to the longer response time from start of the operation of the brake device 20 to application of the brake.

Next, a description is given of the contacted surface 45a and the contact surface 61d that resist the reaction force applied to the spindle 50. In both the normal operation and the extended operation, the brake pads 15 contact with the brake disk for application of the brake, producing a reaction force that is applied to the spindle 50. The force applied to the spindle 50 is transmitted to the guide tube 40 via the clutch nut 61. In this transmission, the contact surface 61d of the clutch nut 61 contacts with the contacted surface 45a of the guide tube 40. When the frictional force is small between the contact surface 61d and the contacted surface 45a contacting with each other, the clutch nut 61 rotates and accordingly the spindle 50 moves slightly in the front and rear directions, resulting in instability of the braking force. A lubricant is applied between the spindle 50 and the clutch nut 61 and between the cap 44 and the clutch nut 61. Because of its fluidity, a lubricant may spread between the contact surface 61d and the contacted surface 45a through repeated environmental changes (changes in temperature or humidity between day and night or between seasons). If an excess amount of lubricant accumulates between the contact surface 61d and the contacted surface 45a, a smaller frictional force is produced between the contact surface 61d and the contacted surface 45a, possibly resulting in instability of braking. Particularly in the extended operation, the clutch nut 61 is not restrained by the restriction portion 64 and thus rotates easily. If an excess amount of lubricant accumulates between the contact surface 61d and the contacted surface 45a, the clutch nut 61 rotates largely, and the spindle 50 moves unsteadily.

To address the problem described above, this embodiment is provided with an inhibiting portion 69. The inhibiting portion 69 inhibits accumulation of a residue on the contact surface 61d. More specifically, at least one of the contacted surface 45a and the contact surface 61d has the inhibiting portion 69 provided therein. The inhibiting portions 69 forms a space between the contact surface 61d and the contacted surface 45a when the contact surface 61d and the contacted surface 45a contact with each other. An example of the inhibiting portion 69 is grooves 70. Besides the grooves 70, the inhibiting portion 69 may be formed of through-holes or recesses.

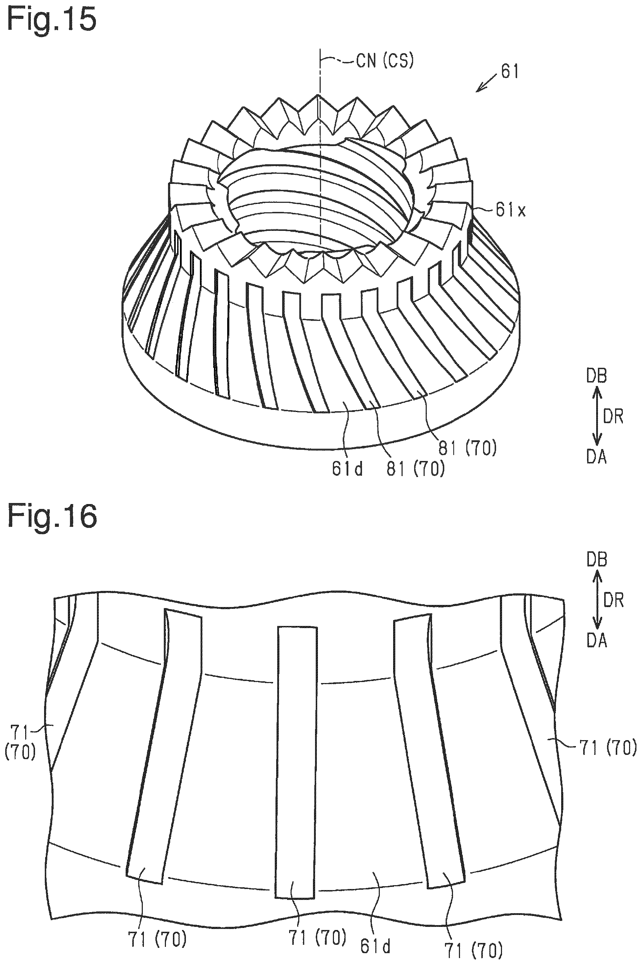

The inhibiting portion 69 will now be described with reference to Figs. 13 and 14. Fig. 13 shows the clutch nut 61 such that the lower side of the drawing faces in the front direction. Also in Figs. 15 to 21, the lower side of each drawing faces in the front direction, as in Fig. 13. Fig. 14 shows a sectional view such that the upper side of the drawing faces in the front direction, as in Fig. 1.

As described above, the clutch nut 61 includes the tubular portion 61a and the engagement portion 61b. The engagement portion 61b includes a base portion 61r and a truncated cone portion 61s tapered from the base portion 61r toward the rear direction DB. The rear end of the truncated cone portion 61s is connected to a middle portion of the tubular portion 61a. A portion of the tubular portion 61a on the rear side of the truncated cone portion 61s is referred to as "the rear tube 61x." The surface of the rear tube 61x does not contact with other components with a pressure in any state including the state where the contact surface 61d and the contacted surface 45a contact with each other. The contact surface 61d is formed in the outer circumferential surface of the truncated cone portion 61s.

In this embodiment, the inhibiting portion 69 is provided in the contact surface 61d. More specifically, the inhibiting portion 69 includes primary grooves 71 formed in the contact surface 61d and secondary grooves 72 formed in the contact surface 61d. Each of the primary grooves 71 extends in the rear direction DB from a front edge of the contact surface 61d to a middle portion of the rear tube 61x. Each of the primary grooves 71 extends along a line of intersection of a plane containing the rotation axis CN of the clutch nut 61 and the contact surface 61d.

Each of the primary grooves 71 forms a space SI between the contact surface 61d and the contacted surface 45a when the contact surface 61d and the contacted surface 45a contact with each other. Since each of the primary grooves 71 extends to an outside of the contact surface 61d, the space SI is continuous to a space SX around a contact portion 74 in which the contact surface 61d and the contacted surface 45a contact with each other. A plurality of primary grooves 71 may be provided in the contact surface 61d. The plurality of primary grooves 71 are arranged at regular intervals in the circumferential direction. The primary grooves 71 have a larger width and a larger depth than the secondary grooves 72.

The section of the primary grooves 71 cut along a plane perpendicular to the rotation axis CN has any of the following shapes: an arc, a V-shape, a U-shape, a W-shape, a rectangle devoid of one side, a triangle devoid of one side, and the like. When the clutch nut 61 has a plurality of primary grooves 71 provided therein, these primary grooves 71 may have different sectional shapes. The clutch nut 61 may have one or more primary grooves 71 formed therein. For example, the clutch nut 61 has 1 to 60 primary grooves 71 formed therein. The distance between any two adjacent primary grooves 71 in the circumferential direction (the distance equal to the interval between two primary grooves 71 excluding the width of the primary grooves 71) is preferably larger than the width of the primary grooves 71. This prevents that the contact area between the contact surface 61a and the contacted surface 45a be so small that the frictional force therebetween is small and the clutch nut 61 rotates easily. The width of the primary grooves 71 in the circumferential direction is, for example, 0.1 mm or larger. The depth of the primary grooves 71 is, for example, 0.1 mm or larger.

The secondary grooves 72 are provided in the contact surface 61d so as to intersect the primary grooves 71. The secondary grooves 72 are continuous to the primary grooves 71. For example, the secondary grooves 72 extend in the circumferential direction to connect between two primary grooves 71. A plurality of secondary grooves 72 may be provided in the contact surface 61d. The plurality of secondary grooves 72 are arranged in the contact surface 61d at regular intervals along the front-rear direction DR. It is preferable that a plurality of secondary grooves 72 are provided in each of regions between the primary grooves 71 arranged in the circumferential direction.

The section of the secondary grooves 72 cut along a plane containing the rotation axis CN has any of the following shapes: an arc, a V-shape, a U-shape, a W-shape, a rectangle devoid of one side, a triangle devoid of one side, and the like. When the clutch nut 61 has a plurality of secondary grooves 72 provided therein, these secondary grooves 72 may have different sectional shapes. The clutch nut 61 may have one or more secondary grooves 72 formed therein. For example, the clutch nut 61 has one or more secondary grooves 72 formed therein. The distance between any two adjacent secondary grooves 72 in the direction along the rotation axis CN (the distance equal to the interval between two secondary grooves 72 excluding the width of the secondary grooves 72) is preferably larger than the width of the secondary grooves 72. This prevents that the contact area between the contact surface 61a and the contacted surface 45a be so small that the frictional force therebetween is small and the clutch nut 61 rotates easily. The width of the secondary grooves 72 in the direction along a line of intersection of a plane containing the rotation axis CN and the contact surface 61d is, for example, 0.1 mm or larger. The depth of the secondary grooves 72 is, for example, 0.1 mm or larger.

Next, operation of the inhibiting portion 69 will be described. When the contact surface 61d of the clutch nut 61 contacts with the contacted surface 45a of the guide tube 40, the inhibiting portion 69 forms the space Sl between the contact surface 61d and the contacted surface 45a. Therefore, when the contact surface 61d and the contacted surface 45a contact with each other, a lubricant remaining on the contacted surface 45a or the contact surface 61d is pressed into the space Si formed by the inhibiting portion 69 between the contact surface 61d and the contacted surface 45a. Thus, the lubricant is smoothly removed from the contact surface 61d and the contacted surface 45a, thereby to inhibit the lubricant from remaining or accumulating between these surfaces. Also, the residue of the lubricant is inhibited from accumulating. This arrangement inhibits rotation of the clutch nut 61 due to slipping when the contact surface 61d and the contacted surface 45a contact with each other during application of the brake, stabilizes the position of the spindle 50 during application of the brake, and improves the stability of braking operation on the brake object (stability of braking).

As described above, the space SI formed by contact of the contact surface 61d and the contacted surface 45a is continuous to the space SX around the contact portion 74 in which the contact surface 61d and the contacted surface 45a contact with each other (this arrangement is hereinafter referred to as "the external connection structure"). Therefore, an unlimited amount of lubricant can be removed, and even when an excess amount of lubricant is present between the contact surface 61d and the contacted surface 45a, the stability of braking operation on the brake object is maintained.

If the space SI formed by the inhibiting portion 69 is closed with respect to the external space SX, an excess amount of accumulating lubricant that cannot be received in the space SI remains between the contact surface 61d and the contacted surface 45a, resulting in a limited capability of removing the lubricant. Increasing the volume of the inhibiting portion 69 leads to a larger size of the clutch nut 61. By contrast, the above arrangement, or the external connection structure, allows an unlimited amount of lubricant to be removed and thus does not lead to a larger size of the clutch nut 61.

Further, the inhibiting portion 69 includes the secondary grooves 72 that extend to intersect the primary grooves 71 and continue to the primary grooves 71. Therefore, in the contact portion 74 in which the contact surface 61d and the contacted surface 45a contact with each other, a lubricant located away from the primary grooves 71 flow into the secondary grooves 72 and then are discharged from the contact portion 74 through the primary grooves 71. Thus, the lubricant can be efficiently discharged from a wider area around the primary grooves 71 as compared to an arrangement without the secondary grooves 72.

Advantageous effects of the embodiment will now be described.
(1) The clutch device 39 transmits the force produced by the drive unit 30 to the spindle 50 (the output unit) with a frictional force of the contact surface 61d, or the clutch device 39 disconnects transmission of the force to the spindle 50. The inhibiting portion 69 is provided in the contact surface 61d to inhibit accumulation of the residue. With this arrangement, a residue is inhibited from accumulating on the contact surface 61d of the clutch device 39, and therefore, the position of the spindle 50 (the output unit) is stabilized during application of the brake, resulting in improved stability of braking operation on the brake object.
(2) In the above clutch device 39, the inhibiting portion 69 is constituted by the grooves 70 formed in at least one of the contact surface 61d and the contacted surface 45a configured to contact with the contact surface 61d. The grooves 70 are, for example, the primary grooves 71 described above. With this arrangement, a residue can be guided into the grooves 70 formed in at least one of the contact surface 61d and the contacted surface 45a, and therefore, the residue can be inhibited from accumulating on the contact surface 61d.
(3) In the above clutch device 39, for example, the grooves 70 extend to an outside of the contact portion 74 in which the contact surface 61d and the contacted surface 45a contact with each other. With this arrangement, a residue flowing into the grooves 70 can be discharged to portions other than the contact portion 74, and therefore, the residue can be inhibited from accumulating in the contact portion 74.
(4) In the above clutch device 39, the inhibiting portion 69 includes the primary grooves 71 formed in at least one of the contact surface 61d and the contacted surface 45a and the secondary grooves 72 intersecting the primary grooves 71. With this arrangement, a residue located away from the primary grooves 71 flow into the secondary grooves 72 and then are discharged through the primary grooves 71. Thus, in a wide area around the primary grooves 71, the residue can be inhibited from accumulating.
(5) The brake device 20 includes components to be lubricated with a lubricant that may form a residue, and the brake device 20 is provided with the clutch device 39. One example of the components is the spindle 50. With this arrangement, a lubricant in the brake device 20 can be inhibited from accumulating on the contact surface 61d of the clutch device 39, resulting in improved stability of braking operation on the brake object.
(6) The brake device 20 includes: the spindle 50 (the output unit); the guide tube 40 (the transmission member) configured to contact with the clutch nut 61 and thereby transmit the power from the drive unit 30 to the spindle 50; and the inhibiting portion 69. The inhibiting portion 69 inhibits a lubricant from remaining on at least one of the contact surface 61d of the clutch nut 61 provided on the spindle 50 and the contacted surface 45a of the guide tube 40 (the transmission member). With this arrangement, in the brake device 20 including the clutch nut 61, a lubricant can be inhibited from remaining on at least one of the contact surface 61d of the clutch device 61 and the contacted surface 45a of the guide tube 40, resulting in improved stability of braking operation on the brake object.

A first variation of the clutch nut 61 will now be described with reference to Fig. 15. In this variation, the inhibiting portion 69 provided in the contact surface 61d includes spiral grooves 81. Each of the spiral grooves 81 extends in the rear direction DB from a front edge of the contact surface 61d to a middle portion of the rear tube 61x. Each of the spiral grooves 81 extends to intersect a line of intersection of a plane containing the rotation axis CN of the clutch nut 61 and the contact surface 61d. The spaces SI formed by the spiral grooves 81 upon contact of the contact surface 61d and the contacted surface 45a are continuous to the space SX around the contact portion 74 in which the contact surface 61d and the contacted surface 45a contact with each other. This arrangement produces the same advantageous effects as the inhibiting portion 69 of the embodiment.

A second variation of the clutch nut 61 will now be described with reference to Fig. 16. In this variation, the inhibiting portion 69 provided in the contact surface 61d includes the primary grooves 71 but does not include the secondary grooves 72. The primary grooves 71 have the same structure as the primary grooves 71 of the embodiment. This arrangement also produces the same advantageous effects as the inhibiting portion 69 of the embodiment. In this variation, the manufacturing process of the clutch nut 61 is simplified.

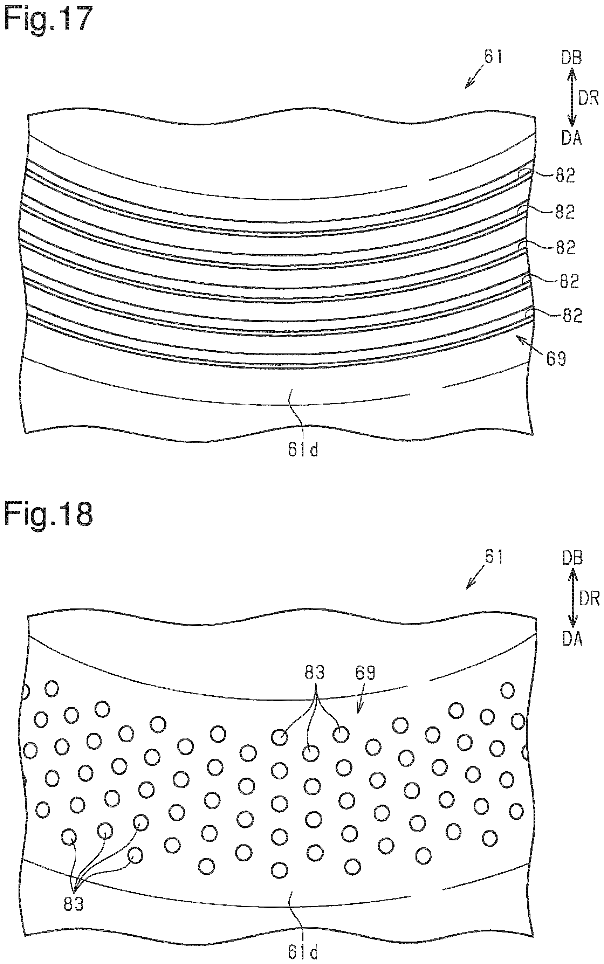

A third variation of the clutch nut 61 will now be described with reference to Fig. 17. In this variation, the inhibiting portion 69 provided in the contact surface 61d includes circumferential grooves 82. Each of the circumferential grooves 82 extends along a (circular) line of intersection of a plane perpendicular to the rotation axis CN of the clutch nut 61 and the contact surface 61d. The spaces SI formed by the circumferential grooves 82 upon contact of the contact surface 61d and the contacted surface 45a have an annular shape. The edges in the border between the circumferential grooves 82 and the contact surface 61d extend along the rotational direction of the clutch nut 61, and therefore, less wear occurs when the contact surface 61d and the contacted surface 45a contact with each other. This arrangement also produces the same advantageous effects as the inhibiting portion 69 of the embodiment. In this variation, the plurality of circumferential grooves 82 may be connected with each other via passages. The passages connecting between the circumferential grooves 82 may extend to an outside of the contact surface 61d. Thus, the lubricant can be discharged to the space SX around the contact portion 74 in which the contact surface 61d and the contacted surface 45a contact with each other.

A fourth variation of the clutch nut 61 will now be described with reference to Fig. 18. In this variation, the inhibiting portion 69 provided in the contact surface 61d is constituted by a plurality of recesses 83. The recesses 83 are provided over the entirety of the contact surface 61d. This arrangement also produces the same advantageous effects as the inhibiting portion 69 of the embodiment. In this variation, the plurality of recesses 83 may be connected with each other via passages. The passages connecting between the recesses 83 may extend to an outside of the contact surface 61d. Thus, the lubricant can be discharged to the space SX around the contact portion 74 in which the contact surface 61d and the contacted surface 45a contact with each other.

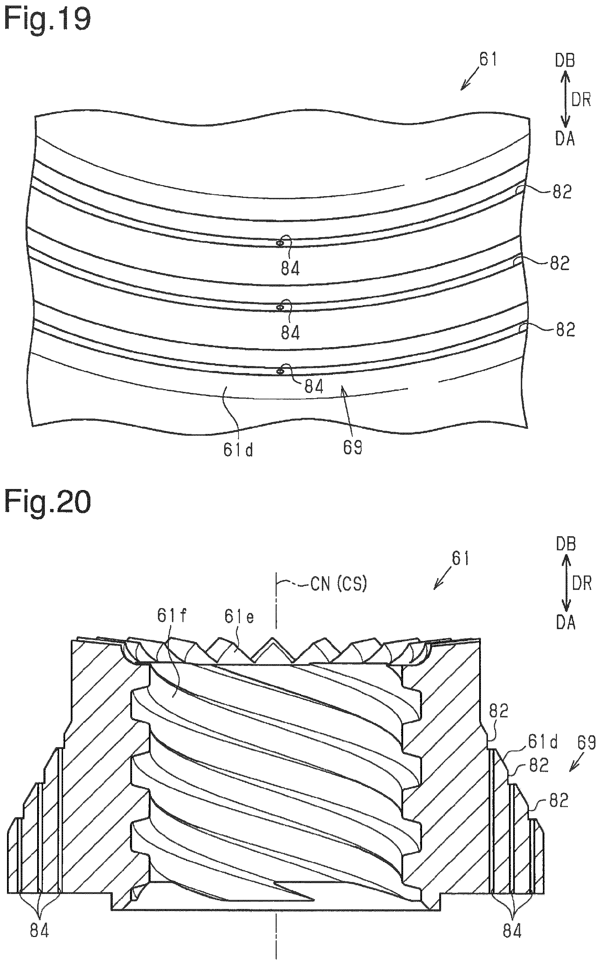

A fifth variation of the clutch nut 61 will now be described with reference to Figs. 19 and 20. In this variation, the inhibiting portion 69 provided in the contact surface 61d includes the same circumferential grooves 82 as in the third variation and through-holes 84. The through-holes 84 connect between the circumferential grooves 82 and the space SX around the contact portion 74 in which the contact surface 61d and the contacted surface 45a contact with each other. In other words, the spaces SI formed by contact of the contact surface 61d and the contacted surface 45a are continuous to the space SX around the contact portion 74. Thus, the lubricant flowing into the circumferential grooves 82 can be discharged to an outside through the through-holes 84. Thus, a substantially unlimited amount of lubricant can be removed, and therefore, even when a large amount of lubricant is present between the contact surface 61d and the contacted surface 45a, the lubricant can be inhibited from remaining between the contact surface 61d and the contacted surface 45a.

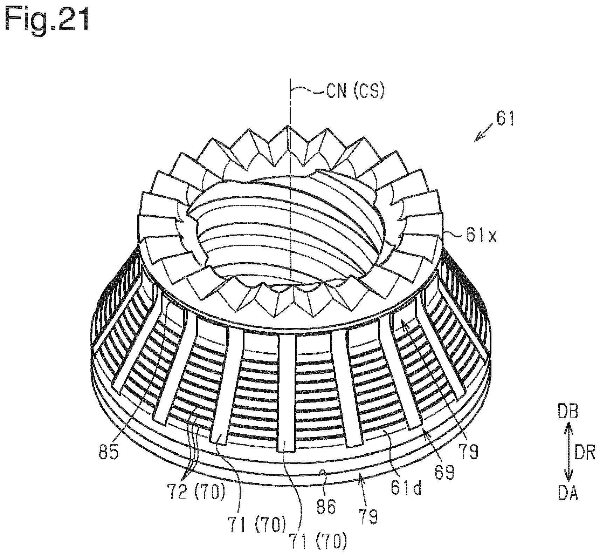

A sixth variation of the clutch nut 61 will now be described with reference to Fig. 21. In the variation, the inhibiting portion 69 is provided. The inhibiting portion 69 provided in the contact surface 61d has the same structure as in the embodiment. Further, a blocking portion 79 is provided in the circumference of the contact surface 61d to block flow of the lubricant onto the contact surface 61d. For example, grooves are provided as the blocking portion 79 outside the contact portion 74 in which the contact surface 61d and the contacted surface 45a contact with each other, thereby to block flow of the lubricant into the contact portion 74. The grooves may be constituted by, for example, external passages 85, 86 as described below.

More specifically, a first external passage 85 is provided as a groove in the outer circumferential surface of the rear tube 61x. A second external passage 86 is provided as a groove in the outer circumferential surface of the base portion 61r. The first external passage 85 is connected to the primary grooves 71. With this arrangement, the lubricant accumulates in the external passages 85, 86, and therefore, the lubricant is inhibited from remaining between the contact surface 61d and the contacted surface 45a. The lubricant is also inhibited from remaining on the rear teeth 61e of the clutch nut 61. When any one of the first external passage 85 and the second external passage 86 is provided, the primary grooves 71 and the secondary grooves 72 may be omitted.

The blocking portion 79 may also be formed as a barrier (not shown) that blocks flow of the lubricant into the contact portion 74. For example, the barrier is formed as an annular wall projecting from an outer circumferential surface of the rear tube 61x in the radial directions (the directions of radii of a circle centered at the rotation axis CN), or the barrier is formed as an annular wall encircling the rear teeth 61e of the rear tube 61x. Alternatively, the barrier is formed as an annular wall (a flange) projecting from the outer circumferential surface of the base portion 61r or formed as an annular wall extending from the base portion 61r in the front direction DA. The wall has such a height (a height in the radially outward directions of a circle centered at the rotation axis CN) as to prevent the lubricant from flowing over the wall. When the caliper device 1 is mounted to a railroad vehicle, the rotation axis CN of the clutch nut 61 is substantially horizontal, and the barrier extends in the vertical direction. Therefore, the lubricant blocked by the barrier flows downward and thus does not flow into the contact portion 74. Further, a passage of the lubricant may be provided in the guide tube 40 near the barrier. The lubricant blocked by the barrier spreads along the passage in the guide tube 40. Thus, the lubricant does not flow into the contact portion 74 and is inhibited from accumulating between the contact surface 61d and the contacted surface 45a.

This variation produces the following advantageous effects.
(1) In the clutch device 39 according to this variation, the blocking portion 79 is provided in the circumference of the contact surface 61d. The blocking portion 79 blocks the lubricant that flows onto the contact surface 61d and accumulates as a residue. With this arrangement, the lubricant can be inhibited from flowing onto the contact surface 61d. Thus, the lubricant can be inhibited from accumulating on the contact surface 61d.
(2) In the clutch device 39 of the embodiment, the inhibiting portion 69 may be replaced with the blocking portion 79 according to this variation. With this arrangement, the lubricant can be inhibited from flowing onto the contact surface 61d. Thus, the lubricant can be inhibited from accumulating on the contact surface 61d.

### < Other Embodiments >

The inhibiting portion 69 may also be provided in the contacted surface 45a of the guide tube 40. In this case, the inhibiting portion 69 in the contact surface 61d of the clutch nut 61 may be omitted.

The structure of the inhibiting portion 69 is not limited to those in the above embodiment and the variations. For example, the inhibiting portion 69 may be formed by dividing the contacted portion 45 into two halves. The inhibiting portion 69 may be formed as a gap between two halves of the contacted portion 45. Such a gap constitutes the space SI formed by contact of the contact surface 61d and the contacted surface 45a and constitutes a passage of the lubricant.

In another example, the inhibiting portion 69 may be formed as a through-hole extending from the contact surface 61d to the hole 61c of the clutch nut 61. Alternatively, the inhibiting portion 69 may be formed as a through-hole extending from the contacted surface 45a of the guide tube 40 to the external space SX.

In the embodiment, both the contact surface 61d of the clutch nut 61 and the contacted surface 45a of the guide tube 40 are formed as a side surface of a truncated cone oblique to the central axis CS of the spindle 50. However, this structure is not limitative. For example, both these surfaces may be formed as a flat surface perpendicular to the central axis CS of the spindle 50.

In the embodiment, the restraint member 63 included in the position adjustment mechanism 62 is not limited to the restriction portion 64 of the embodiment. The restraint member 63 may have any structure that permits the clutch nut 61 to rotate when the guide tube 40 is located at a position on the front side DA of the prescribed position. For example, the engagement between the projections 64b of the restriction portion 64 and the contact portion 34 of the inner tube 33 may be modified as follows. The projections 64b of the restriction portion 64 are replaced with a projecting engagement portion provided on the inner tube 33 and extending through the through-holes 43 of the guide tube 40, and the projecting engagement portion contacts with a stopper portion of the restriction portion 64.

The inhibiting portion 69 described above can be applied to the brake device 20 that does not include the position adjustment mechanism 62. For example, the brake device 20 without the position adjustment mechanism 62 includes the guide tube 40, the clutch nut 61, and the spindle 50 and does not include the restriction portion 64. The clutch nut 61 does not include the thrust bearing 47 disposed between the cap 44 and the clutch nut 61, such that the clutch nut 61 does not rotate easily with respect to the spindle 50. This prevents that when the guide tube 40 moves in the rear direction to stop braking, the thrust bearing 47 allows the clutch nut 61 to move continuously in the rear direction with respect to the spindle 50 along with the guide tube 40 moving in the rear direction. In the brake device 20 described above, the contact surface 61d of the clutch nut 61 and the contacted surface 45a of the guide tube 40 contact with each other during the normal operation described for the embodiment. Therefore, the inhibiting portion 69 produces the same advantageous effects as in the embodiment.

In the embodiment, the drive unit 30 may be any drive device that can move the guide tube 40 in the front-rear direction DR. For example, the drive unit 30 may be formed as a hydraulic drive device for moving the piston 35 by a hydraulic pressure or a mechanism for driving the guide tube 40 directly by an electric actuator.

The present invention is applicable to various clutches or brake devices for braking a brake object.

### LIST OF REFERENCE NUMBERS

- 1: caliper device
- 10: caliper body
- 11: bracket
- 12: support member
- 12a: body portion
- 12b: arm portion
- 12c: suspending portion
- 12e: pin receiving portion
- 12d: pin receiving portion
- 12r: support pin
- 12s: pivot pin
- 12t: back plate pin
- 13A: brake lever
- 13B: brake lever
- 13a: first lever
- 13b: second lever
- 13c: connecting portion
- 13d: pin receiving portion
- 13e: proximal end portion
- 13f: proximal end portion
- 13x: pivot portion
- 13y: pivot portion
- 14: back plate
- 15: brake pad
- 16a: pin
- 16b: pin
- 20: brake device
- 30: drive unit
- 31: cylinder
- 32: outer tube
- 32a: front surface portion
- 32b: rear surface portion
- 33: inner tube
- 33a: inner tube front portion
- 33b: inner tube rear portion
- 34: contact portion
- 35: piston
- 35a: roller receiving portion
- 36: boosting mechanism
- 37: boosting lever
- 37a: lever body
- 37b: first roller
- 37c: second roller
- 37d: pivot
- 39: clutch device
- 40: guide tube
- 40A: front member
- 40B: rear member
- 40a: roller receiving portion
- 40b: spring receiving portion
- 41: first biasing member
- 41a: front end
- 41b: rear end
- 43: through-hole
- 44: cap
- 44a: through-hole
- 45: contacted portion
- 45a: contacted surface
- 46: spring receiving portion
- 47: thrust bearing
- 50: spindle
- 50a: connection portion
- 50b: external thread
- 50c: front end surface
- 51: core
- 51a: rear end surface
- 52: second biasing member
- 53: stopper
- 54: guide rod
- 55: anti-rotation member
- 55a: hole
- 61: clutch nut
- 61a: tubular portion
- 61b: engagement portion
- 61c: hole
- 61d: contact surface
- 61e: rear teeth
- 61f: internal thread
- 61r: base portion
- 61s: truncated cone portion
- 61x: rear tube
- 62: position adjustment mechanism
- 63: restraint member
- 64: restriction portion
- 64a: hole
- 64b: projection
- 64c: front teeth
- 65: third biasing member
- 69: inhibiting portion
- 70: groove
- 71: primary groove
- 72: secondary groove
- 74: contact portion
- 79: blocking portion
- 81: spiral groove
- 82: circumferential groove
- 83: recess
- 84: through-hole
- 85: external passage
- 86: external passage
- 90: connection member
- 90a: one end portion
- 90b: other end portion
- 91: fitting hole
- 92: adapter
- 92a: flange
- 93: biasing member
- 94: rolling member
- 95: anchor
- SP: annular space
- SA: pressure chamber
- SB: rear housing chamber
- SR: housing chamber
- ST: core chamber
- SI: space
- SX: space
- C: central axis
- CS: central axis
- CN: rotation axis

## Claims

1. A clutch device (39) for transmitting a force produced by a drive unit (30) to an output unit (50), which is configured to be movable in a linear movement direction (DR, C, CN, CS), with a frictional force produced between a contact surface (61d) and a contacted surface (45a) or disconnecting transmission of the force to the output unit (50),
the clutch device (39) comprising an inhibiting portion (69) which is configured to form a space (SI) between the contact surface (61d) and the contacted surface (45a) when the contact surface (61d) and the contacted surface (45a) contact with each other to form a contact portion (74) therebetween and which is configured to press a residue remaining on the contacted surface (45a) or the contact surface (61d) into the space (SI) when the contact surface (61d) and the contacted surface (45a) contact with each other to inhibit the residue from accumulating on the contact surface (61d),
wherein the contact surface (61d) and the contacted surface (45a) are oblique to the linear movement direction (DR, C, CN, CS) of the output unit (50),
wherein the inhibiting portion (69) includes a plurality of grooves (70, 71, 72; 81; 82) formed in at least one of the contact surface (61d) and the contacted surface (45a) configured to contact with the contact surface (61d),
**characterized in that**
the clutch device (39) includes a clutch nut (61) that includes a truncated cone portion (61s) and a tubular portion (61x, 61a) connected to a smaller diameter side of the truncated cone portion (61s), and
wherein the plurality of grooves (70, 71, 72; 81; 82) includes grooves (71; 81) formed on the clutch nut (61) and each extending from the truncated cone portion (61s), which is included in the contact portion (74), to a middle portion of the tubular portion (61x, 61a), which is an outside of the contact portion (74).

2. The clutch device (39) according to claim 1, wherein the plurality of grooves (70, 71, 72; 81; 82) of the inhibiting portion (69) include one or more primary grooves (71) and one or more secondary grooves (72), the one or more primary grooves (71) being formed in at least one of the contact surface (61d) and the contacted surface (45a), the one or more secondary grooves (72) intersecting the one or more primary grooves (71).

3. The clutch device (39) according to any one of claims 1 to 2, wherein a blocking portion (79) is provided in a circumference of the contact surface (61d) to block a lubricant that flows onto the contact surface (61d) and accumulates as the residue.

4. The clutch device (39) according to claim 1, wherein in place of the inhibiting portion (69), a blocking portion (79) is provided in a circumference of the contact surface (61d) to block a lubricant that flows onto the contact surface (61d) and accumulates as the residue.

5. A brake device (20) including a component to be lubricated with a lubricant that forms the residue, the brake device (20) comprising the clutch device (39) according to any one of claims 1 to 4.

6. The brake device (20) according to claim 5, comprising:
the output unit (50) for applying a force to a brake object by moving with respect to the drive unit (30); and
a transmission member (40) for transmitting a power from the drive unit (30) to the output unit (50) by contacting with the clutch nut (61) provided on the output unit (50);
wherein the clutch nut (61) provided on the output unit (50) includes the contact surface (61d), and the transmission member (40) includes the contacted surface (45a).

## Patentansprüche

1. Kupplungsvorrichtung (39) zum Übertragen einer von einer Antriebs-Einheit (30) erzeugten Kraft auf eine Abtriebs-Einheit (50), die so ausgeführt ist, dass sie in einer Richtung linearer Bewegung (DR, C, CN, CS) bewegt werden kann, mit einer Reibungskraft, die zwischen einer aktiven Kontaktfläche (61 d) und einer passiven Kontaktfläche (45a) erzeugt wird, oder zum Unterbrechen von Übertragung der Kraft auf die Abtriebs-Einheit (50), wobei die Kupplungsvorrichtung (39) einen Verhinderungsabschnitt (69) umfasst, der so ausgeführt ist, dass er einen Raum (SI) zwischen der aktiven Kontaktfläche (61d) und der passiven Kontaktfläche (45a) bildet, wenn die aktive Kontaktfläche (61d) und die passive Kontaktfläche (45a) miteinander in Kontakt kommen, um einen Kontaktabschnitt (74) zwischen ihnen zu bilden, und der so ausgeführt ist, dass er einen an der passiven Kontaktfläche (45a) oder der aktiven Kontaktfläche (61d) verbleibenden Rückstand in den Raum (SI) hinein presst, wenn die aktive Kontaktfläche (61d) und die passive Kontaktfläche (45a) miteinander in Kontakt kommen, um zu verhindern, dass sich der Rückstand an der aktiven Kontaktfläche (61d) ansammelt,
wobei die aktive Kontaktfläche (61d) und die passive Kontaktfläche (45a) schräg zu der Richtung linearer Bewegung (DR, C, CN, CS) der Abtriebs-Einheit (50) sind,
der Verhinderungsabschnitt (69) eine Vielzahl von Nuten (70, 71, 72; 81; 82) enthält, die in der aktiven Kontaktfläche (61d) und/oder der passiven Kontaktfläche (45a) ausgebildet sind, die so ausgeführt ist, dass sie mit der aktiven Kontaktfläche (61d) in Kontakt kommt,
**dadurch gekennzeichnet, dass**
die Kupplungsvorrichtung (39) eine Kupplungsmutter (61) enthält, die einen Kegelstumpfabschnitt (61s) und einen Röhrenabschnitt (61x, 61a) enthält, der mit einer Seite des Kegelstumpfabschnitts (61s) mit kleinerem Durchmesser verbunden ist, und
wobei die Vielzahl von Nuten (70, 71, 72; 81; 82) Nuten (71; 81) einschließt, die an der Kupplungsmutter (61) ausgebildet sind und sich jeweils von dem Kegelstumpfabschnitt (61s), der in dem Kontaktabschnitt (74) enthalten ist, zu einem mittleren Abschnitt des Röhrenabschnitts (61x, 61a) erstrecken, der eine Außenseite des aktiven Kontaktabschnitts (74) ist.

2. Kupplungsvorrichtung (39) nach Anspruch 1, wobei die Vielzahl von Nuten (70, 71, 72; 81; 82) des Verhinderungsabschnitts (69) eine oder mehrere primäre Nut/en (71) sowie eine oder mehrere sekundäre Nut/en (72) einschließt, die eine oder mehreren primäre/n Nut/en (71) in der aktiven Kontaktfläche (61 d) und/oder der passiven Kontaktfläche (45a) ausgebildet ist/sind, und die eine oder mehreren sekundäre/n Nut/en (72) die eine oder mehreren primäre/n Nut/en (71) schneidet/schneiden.

3. Kupplungsvorrichtung (39) nach einem der Ansprüche 1 bis 2, wobei ein Blockierabschnitt (79) in einem Umfang der aktiven Kontaktfläche (61d) vorhanden ist, um ein Schmiermittel zu blockieren, das auf die aktive Kontaktfläche (61d) fließt und sich als der Rückstand ansammelt.

4. Kupplungsvorrichtung (39) nach Anspruch 1, wobei anstelle des Sperrabschnitts (69) ein Blockierabschnitt (79) in einem Umfang der aktiven Kontaktfläche (61d) vorhanden ist, um ein Schmiermittel zu blockieren, das auf die Kontaktfläche (61d) fließt und sich als der Rückstand ansammelt.

5. Bremsvorrichtung (20), die eine Komponente enthält, die mit einem Schmiermittel zu schmieren ist, das den Rückstand bildet, wobei die Bremsvorrichtung (20) die Kupplungsvorrichtung (39) nach einem der Ansprüche 1 bis 4 umfasst.

6. Bremsvorrichtung (20) nach Anspruch 5, die umfasst:
die Abtriebs-Einheit (50), mit der durch Bewegen in Bezug auf die Antriebs-Einheit (30) eine Kraft auf ein Bremsobjekt ausgeübt wird; und
ein Übertragungselement (40), mit dem durch Herstellen von Kontakt mit der an der Abtriebs-Einheit (50) vorhandenen Kupplungsmutter (61) eine Kraft von der Antriebs-Einheit (30) auf die Abtriebs-Einheit (50) ausgeübt wird;
wobei die an der Abtriebs-Einheit (50) vorhandene Kupplungsmutter (61) die aktive Kontaktfläche (61d) einschließt und das Übertragungselement (40) die passive Kontaktfläche (45a) einschließt.

## Revendications

1. Dispositif d'embrayage (39) pour transmettre une force produite par une unité d'entraînement (30) à une unité de sortie (50), qui est configurée pour être mobile dans une direction de mouvement linéaire (DR, C, CN, CS), avec une force de frottement produite entre une surface de contact (61d) et une surface en contact (45a), ou couper une transmission de la force à l'unité de sortie (50),
le dispositif d'embrayage (39) comprenant une partie d'inhibition (69) qui est configurée pour former un espace (SI) entre la surface de contact (61d) et la surface en contact (45a) lorsque la surface de contact (61d) et la surface en contact (45a) sont en contact l'une avec l'autre pour former une partie de contact (74) entre elles et qui est configurée pour presser un résidu restant sur la surface en contact (45a) ou sur la surface de contact (61d) dans l'espace (SI) lorsque la surface de contact (61d) et la surface en contact (45a) sont en contact l'une avec l'autre pour empêcher le résidu de s'accumuler sur la surface de contact (61d),
dans lequel la surface de contact (61d) et la surface en contact (45a) sont obliques par rapport à la direction de mouvement linéaire (DR, C, CN, CS) de l'unité de sortie (50), dans lequel la partie d'inhibition (69) comprend une pluralité de rainures (70, 71, 72 ; 81 ; 82) formées dans au moins l'une parmi la surface de contact (61d) et la surface en contact (45a) configurée pour entrer en contact avec la surface de contact (61d),
**caractérisé en ce que**
le dispositif d'embrayage (39) comprend un écrou d'embrayage (61) qui comprend une partie tronconique (61s) et une partie tubulaire (61x, 61a) reliée à un côté de plus petit diamètre de la partie tronconique (61s), et
dans lequel la pluralité de rainures (70, 71, 72 ; 81 ; 82) comprend des rainures (71 ; 81) formées sur l'écrou d'embrayage (61) et chacune s'étendant à partir de la partie tronconique (61s), qui est incluse dans la partie de contact (74), vers une partie médiane de la partie tubulaire (61x, 61a), qui est un extérieur de la partie de contact (74).

2. Dispositif d'embrayage (39) selon la revendication 1, dans lequel la pluralité de rainures (70, 71, 72 ;81 ; 82) de la partie d'inhibition (69) comprennent une ou plusieurs rainures primaires (71) et une ou plusieurs rainures secondaires (72), les une ou plusieurs rainures primaires (71) étant formées dans au moins l'une parmi la surface de contact (61d) et la surface en contact (45a), les une ou plusieurs rainures secondaires (72) entrecoupant les une ou plusieurs rainures primaires (71).

3. Dispositif d'embrayage (39) selon l'une quelconque des revendications 1 à 2, dans lequel une partie de blocage (79) est prévue dans une circonférence de la surface de contact (61d) pour bloquer un lubrifiant qui s'écoule sur la surface de contact (61d) et s'accumule sous forme du résidu.

4. Dispositif d'embrayage (39) selon la revendication 1, dans lequel à la place de la partie d'inhibition (69), une partie de blocage (79) est prévue dans une circonférence de la surface de contact (61d) pour bloquer un lubrifiant qui s'écoule sur la surface de contact (61d) et s'accumule sous forme du résidu.

5. Dispositif de frein (20) comprenant un composant à lubrifier avec un lubrifiant qui forme le résidu, le dispositif de frein (20) comprenant le dispositif d'embrayage (39) selon l'une quelconque des revendications 1 à 4.

6. Dispositif de frein (20) selon la revendication 5, comprenant :
l'unité de sortie (50) pour appliquer une force à un objet de frein en se déplaçant par rapport à l'unité d'entraînement (30) ; et
un élément de transmission (40) pour transmettre une puissance de l'unité d'entraînement (30) à l'unité de sortie (50) par contact avec l'écrou d'embrayage (61) agencé sur l'unité de sortie (50) ;
dans lequel l'écrou d'embrayage (61) agencé sur l'unité de sortie (50) comprend la surface de contact (61d), et l'élément de transmission (40) comprend la surface en contact (45a).
